# EUROPEAN PATENT APPLICATION

(11) **EP 1 347 323 A1**
(43) Date of publication of application: **24.09.2003**
(21) Application number: 02290680.4
(22) Date of filing: 19.03.2002
(51) Int. Cl.: G02B 6/42

(54) **Photonic package based on multi-functional lid**

(71) Applicant: Corning Incorporated, Corning, New York 14831 (US)
(72) Inventor: Gremetz, Sylvain Maxime Francois, 77570 Chateau-Landon (FR); Fendler, Manuel, 77300 Fontainebleau (FR)
(74) Representative: Poole, Michael John

(57) **Abstract**

A package for optical devices comprises a substantially flat lid on which an optical device is mounted. The optical device is preferably soldered to a pedestal of the lid and then wirebonded to electrical connections on the lid. Electrical energy and signals are supplied through the wirebonding to the optoelectronic device enabling the optical fibers to be actively aligned with the optoelectronic device. The device is tested and characterized. If the device fails the characterization test, it is easily replaced before the package is assembled. The cap includes a cavity of sufficient size to fit over the components mounted onto the lid. The cap is placed over the components and sealed with the lid to form a protective package that may be hermetic, near hermetic, or non-hermetic. The lid and cap are manufactured inexpensively using techniques such as electrochemical etching and embossing.

## Description

### BACKGROUND OF THE INVENTION

### Field of the Invention

The present invention relates to optical telecommunication systems and, in particular, to packaging systems and methods for housing optical devices such as optical attenuators, optical amplifiers, gain flattening filters and the like.

### Technical Background

Optical components are widely used in local and long distance optical telecommunication networks and in other photonic applications. These networks comprise various optical devices such as variable optical attenuators (VOAs), silicon optical amplifiers (SOAs), thermal optical switches (TO switches), filters, and couplers to name a few. The necessity to design reliable and low cost packages to house these optical devices, which are subject to various thermal and mechanical loads during their 20 to 25 year lifetime, is of significant importance. A typical example of such optical packages is a metal flat package.

A typical metal flat package comprises two components. One component, referred to here as a cap, is a rectangular metal block with a cavity machined into the metal block for housing the optical components. The cavity is of sufficient size to receive the desired optical device and the attached optical fibers, electrical wires, connectors, and also provide adequate working space in the cavity to assemble the components.

The assembly process of the prior art is dictated by the limitations of the package. First, the optical fibers are aligned and bonded to the optical device with an adhesive. This is done prior to the optical device being placed into the cavity of the cap. The optical fibers must be bonded to the optical device before the device is placed into the cavity because of the very limited space of the cavity prevents the fibers from being aligned and bonded while in the cavity. Consequently, the alignment process is performed without electrical power supplied to the optoelectronic device and the alignment process is therefore hampered by very low power output optical signals that are difficult to detect and this results in low yield for the optical fiber coupling step. Some of the prior art has worked around this problem by adding a straight waveguide to the optical device. However, this solution adds cost, increases the dimensions of the optical device and consequently the footprint of the package, and does not allow active characterization of the optoelectronic device. While this solution is workable for passive optical devices, it does not solve the problem for active devices such as semiconductor optical amplifiers (SOA), lasers, photoreceivers, phototransistors, and the like. For these devices the light is absorbed or emitted with the help of electrical energy and there is an absolute need to apply voltage to these devices to perform the optical fiber alignment.

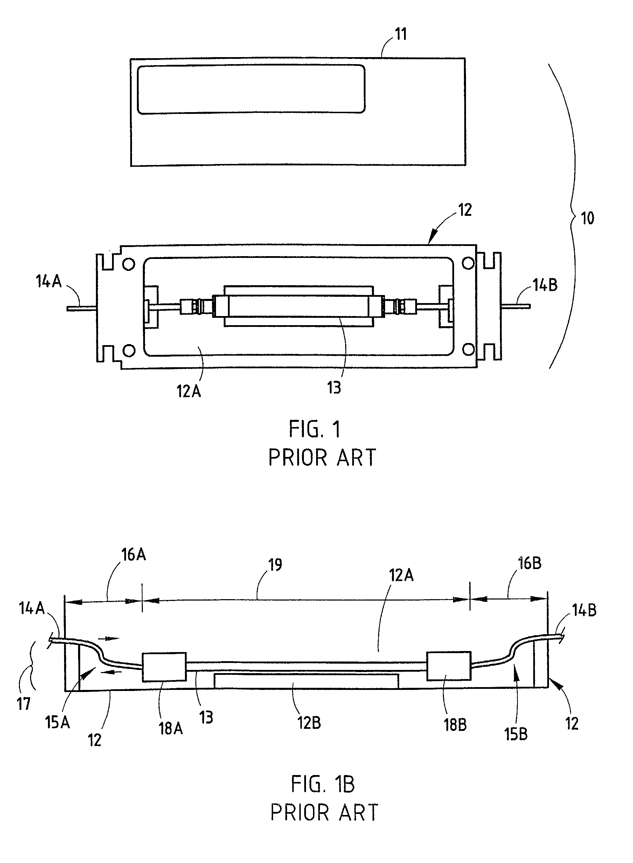

After the optical fibers are aligned and bonded to the optical device, the optical device is bonded into the cavity of the cap with additional adhesive. The optical fibers extend from the optical device through openings at each end of the cap. A portion of the optical fibers are retained inside of the cavity and positioned into the shape of an "S" (S-bending) to relieve thermal or mechanical stresses the package may encounter. However, this S-bending increases the size of the package. Next, the electrical connections are carefully connected to the electrical leads of the optoelectronic device (i.e., wirebonded). The package is completed by placing a lid over the open cavity and securing the lid with adhesive, solders, or welds. Figures 1A and 1B illustrate this type of package.

Fig. 1A is a top view of a prior art package 10 with the lid 11 removed from cap 12. An optoelectronic device 13 is mounted inside of cavity 12A and is coupled to optical fibers 14A and 14B. The optoelectronic device 13 is adhesively bonded in the cavity 12A and is wirebonded to the electrical connections. Cap 12 is machined out of a block of metal or metal alloy which is an expensive process. Fig. 1B is a schematic side view of a cap 12 showing the stress relieving S-bends in the fibers 14 and the layout of the remaining elements. The optoelectronic device 13 is soldered to pedestal 12B. The S-bending is indicated by arrows 15A and 15B and the length of the S-bending is indicated by arrows 16A and 16B respectively. The vertical offset required by the S-bend is indicated by arrow 17 and is about 1.5 mm. A fiber blocks 18A and 18B secure the optical fibers 14A and 14B to the device 13. Arrow 19 indicated the length of the device 13 and blocks 18A and 18B.

Flat metal packages such as those illustrated in Figs. 1A and 1B are expensive and their use represents a significant cost in a typical communication system. The cost of manufacturing the cap and lid alone is significant. In addition, there is significant time and labor cost associated with mounting the optoelectronic devices inside of the cavity 12A using delicate instruments so as not to damage the attached optical fibers. Further, for optoelectronic devices, the devices cannot be actively tested and characterized until the device is coupled to the optical fibers, mounted in the cap, and wirebonded. If the device does not meet predetermined specifications, then expensive rework is required or the entire package may have to be discarded.

Rework is a problem in the prior art because the optoelectronic device and the attached optical fibers are easily damaged during any attempt to remove them from the cavity due to the strong adhesive bond between the device 13 and the cap 12.

Yield is also reduced by the method of assembling the packages. The optical fibers must be attached to the optoelectronic device prior to inserting the device into the cavity. The fragile device with the attached optical fibers (i.e., pigtails) is easily damaged while moving and bonding them inside of the cavity 12A.

Finally, the completed packages are larger than desired. The cavity in the cap is made larger than the optical device to provide space to work while assembling the package and provide space for the stress relieving S-bending of the optical fibers14.

However, it is desirable to obtain a compact thermally compensated optical package that is relatively inexpensive, reliable, and has an increased yield. Additionally, a package design should be adequate not only to mechanically protect the fragile optical device but also to compensate for and minimize the thermally induced stress. Further, it is desirable to manufacture such a package using the same tools or simple tools without the need for expensive new machines since this further reduces costs. Thus, there exists a need for such optical packages and a process for manufacturing such optical packages, which is compact, has increased yield, is inexpensive to manufacture, and which results in a device having reliable, long-term operation.

### SUMMARY OF THE INVENTION

The present invention provides a compact and low cost optical package and provides a method of manufacturing the package without the need for new and expensive tools and machines. The new package provides lids and caps that are manufactured at a fraction of the cost of prior lids and caps. The package method of the invention also simplifies assembly operations and reduces labor costs. Yield is improved and rework is reduced and therefore cost is further reduced. Defective packages are easier to rework and parts can be removed and replaced thereby further reducing costs. The method of assembly also allows the entire package to be assembled at a single work platform without the need for moving the fragile optical device with the attached optical fibers (i.e., pigtails). The package of the invention is smaller than prior packages, provides improved heat dissipation, and has more convenient optical fiber connections than the prior art.

One aspect of the present invention is a substantially flat lid and a cap with a cavity for enclosing an optical or optoelectronic device. The lid is manufactured at low cost from a metal or metal alloy using chemical etching or electro-chemical etching to produce a thin flat metal lid with a pedestal for supporting the optoelectronic device. The package may also provide for electrically conductive pins extending through the lid for communicating electrical signals and energy to an enclosed optoelectronic device. The cap is manufactured using low cost embossing, metal stamping, metal injection molding (MIM), or the similar techniques at a fraction of the cost of prior machined caps. These new low cost caps include at least one aperture in the sidewall through which the optical fibers exit the package.

Another aspect of the invention is the method of attaching an optical device in the package. The prior art required that the optical device be adhesively bonded in the cap and not soldered into the cap. This is because heat from the solder operation would damage the bonding between the optical fibers and the optical device if such operations were attempted. The invention solves this problem by allowing the optoelectronic device to be soldered onto the lid prior to coupling the optical fibers to the optoelectronic device. This is advantageous for several reasons discussed below.

Methods embodying the present invention include the steps of soldering the optical device to the pedestal before attaching the optical fibers. This prevents the high temperature of the solder operation from damaging the adhesive securing the fibers to the device. The optical fibers are actively aligned with the device after the device is soldered to the pedestal and wirebonded. The present invention makes this possible since the optoelectronic device is mounted on the flat lid instead of in the small cavity of the cap. Also, since the device is wirebonded to the electrical connections, the optoelectronic device is operational during the alignment and coupling step of the optical fibers to the device (i.e., active alignment). Using this method, alignment is improved, performance is improved, and yield is increased.

The optical device is then characterized and tested while the optical fibers are aligned and bonded to the device. If the optical device fails the testing step, it is easily removed from the lid by heating the solder joint between the device and the pedestal. In the prior art, it is difficult or nearly impossible to remove an optoelectronic device that has been adhesively bonded into a package. An aspect of performing active alignment according to the present invention is that straight waveguides and similar techniques used in the prior art to accomplish alignment are no longer needed. Finally, the cap is lowered over the optical device and secured to the lid via laser welding.

Another aspect of the invention is that soldering the optoelectronic device to the metal lid improves thermal transfer between the optoelectronic device and the package.

Two aspects of the invention relate to thermal stress management. In one aspect the device is soldered to the metal pedestal instead of bonded with an adhesive as discussed above. The solder-to-metal joint provides improved head dissipation for the optical device. In another aspect of the invention the optical fibers are bent in approximately 90-degree arcs between the optical device and the aperture in the sidewall 22D of the cap. As the temperature changes and the package expands and contracts, the optical fiber merely changes the radius of the arc and thereby the stress is not translated to the fibers or the fiber/device joint in a harmful way.

The optical package and manufacturing method of the present invention, therefore, provides an improved optical package utilizing a unique multi-function lid. The invention provides thermal stress relief, a low cost assembly method, a compact package, and a reliable optical package. Using this package, the cost and performance of various communications systems is improved.

The package and method of the instant invention are applicable for packages that enclose various optical devices including VOAs, TO switches, filters, SOAs and the like.

Additional features and advantages of the invention will be set forth in the detailed description which follows and will be apparent to those skilled in the art from the description or recognized by practicing the invention as described in the description which follows together with the claims and appended drawings.

It is to be understood that the foregoing description is exemplary of the invention only and is intended to provide an overview for the understanding of the nature and character of the invention as it is defined by the claims. The accompanying drawings are included to provide a further understanding of the invention and are incorporated and constitute part of this specification. The drawings illustrate various features and embodiments of the invention which, together with their description serve to explain the principals and operation of the invention.

### BRIEF DESCRIPTION OF THE DRAWINGS

Fig. 1A is a top view showing a prior art package with the lid removed;

Fig. 1B is a schematic side view showing a prior art cap and optical device;

Fig. 2 is a partially exploded view of the package of the invention;

Fig. 3 is a perspective view of the lid and optical device of the invention;

Fig. 4 is a schematic top view of the lid and optical device of the invention;

Fig. 5 is a perspective few of assembled package of the invention.

### DETAILED DESCRIPTION OF THE PREFERRED EMBODIMENTS

Reference will now be made in detail to the present preferred embodiment of the invention, examples of which are illustrated in the accompanying drawings. Wherever possible, the same reference numerals will be used throughout the drawings to refer to the same or like parts.

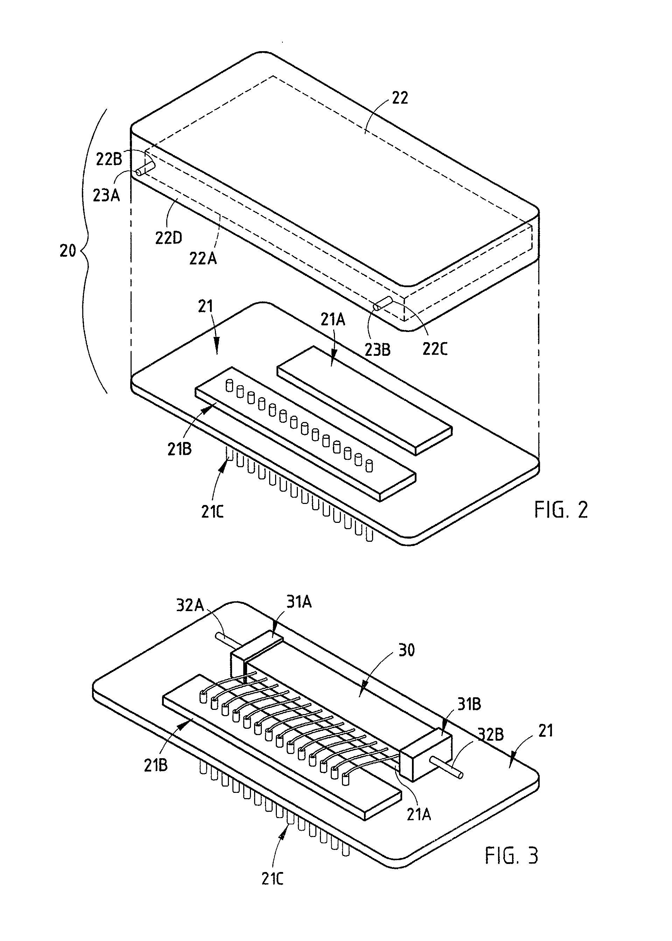

An exemplary embodiment of the flat metal package of the present invention is shown in Figure 2, and is designated generally throughout by reference numeral 20. A brief description of a flat metal package 20 is first presented. For illustrative purposes, the invention in Fig. 2 is shown without an optical device, optical fibers, or electrical wires mounted on the multi-functional lid 21. The pedestal 21A portion of the lid 21 is a thick region of the lid and is intended to be the mounting surface for an optoelectronic device. The glass insulated electrical pins 21C conduct electrical signals such as power, data, and commands from the exterior of the package 20 to the interior of the package 20. When an electronic device is installed, the electrical leads from the device are wirebonded to these pins 21C. Optical fibers (not shown) that are coupled to the optoelectronic device exit the package 20 through fiber apertures 22B and 22C and brazed tubes 23A and 23B. Cap 22 is lowered over pedestal 21A, pins 21B, and optical components and secured to the lid 21 via welding to create a hermetically sealed protective enclosure for the optoelectronic device. The inventive flat metal package 20 will now be described in greater detail.

Lid 21 is referred to as "multi-functional" because multiple assembly functions can be accomplished on the lid. For example, an optoelectronic device is mounted on the lid; the optoelectronic device is wirebonded on the lid; the optical fibers are coupled to the optoelectronic device while it is on the lid; and the optoelectronic device is characterized while on the lid. This multi-function design provides many advantages such as reduced costs, higher yield, and improved performance that are discussed below.

Flat metal package 20 includes cap 22 and lid 21. Lid 21 comprises pedestal 21A, pin support region 21B, and glass insulated metal pins 21C. Pedestal 21A supports an optical device 30 (see Fig. 3) which is soldered, adhesively bonded, or otherwise secured to pedestal 21A. An optical device may be secured to lid 21 without thick pedestal 21A however, the thick pedestal 21A is preferred for the improved strength, stiffness, and heat dissipation qualities it provides.

Lid 21 is preferably made of metal and is about 0.1 mm thick except for the pedestal 21A and pins support region 21B that are preferably about 1.0 mm thick. The lid 21 is manufactured using chemical or electro-chemical etching techniques that are low cost compared to the prior art. In addition, the thin lid permits seam sealing between the lid 21 and the cap 22.

The optoelectronic device 30 (see Fig. 3) is wirebonded to glass insulated pins 21C that enter the package 20 through pin support region 21B. The pins 21C supply power and communicate command and data signals to the optoelectronic device. Of course, if the device is only an optical device and has no electrical connections, then the pins 21C and pin support region 21B are not needed.

The optical fibers 32A and 32B that are coupled to the optoelectronic device are threaded through the fiber apertures 22B and 22C located in the sidewall 22D of cap 22. This design provides several advantages. First, the overall length of the package is reduced. In the preferred embodiment the length is reduced by approximately 16 mm compared to the prior art as will be illustrated below. Second, the design is useful in conserving space in a module or on a motherboard. In the prior art the optical fibers exit from the ends of the package (see Figure 1). In the present invention, the fibers exit from the sidewall 22D of the cap 22 which facilitates coupling to adjacent devices or packages thus saving space.

The preferred embodiment for fiber apertures 22B and 22C includes tubes 23 brazed onto cap 22 as shown and coupled to the fiber apertures 22B and 22C. The tubes 23 are sealed around the optical fibers to create a hermetic seal. Sealing is accomplished with adhesive or other known means. Cap 22 includes a cavity 22A (shown in phantom) which allows cap 22 to be lowered over pedestal 21A and pins 21C and rest on lid 21. Cap 22 and lid 21 are then laser welded along their common border to secure the two pieces together and form a hermetic seal. The resulting thin metal package 20 may be hermetically sealed, near-hermetically sealed, or non-hermetically sealed depending on the desired application.

Embossing, metal stamping, metal injection molding (MIM) or similar method is used to form cap 22. These methods are less expensive then the machining methods of the prior art. The resulting cap 22 has walls that are preferably about 1.5 mm thick. It is estimated that the manufacturing techniques for the lid 21 and cap 22 will reduce manufacturing costs by a factor of approximately 20 or more.

Referring now to Figure 3 there is illustrated a perspective view of lid 21 according to the invention with an optoelectronic device 30 secured to pedestal 21A. One aspect of the invention is that multiple manufacturing operations are performed on lid 21 thereby resulting in several manufacturing and performance improvements.

First, the optoelectronic device 30 is soldered to pedestal 21A and wirebonded to pins 21C. The prior art was unable to solder the optoelectronic device 30 because the heat of the solder operation would damage the adhesive bond between the optical fibers 32 and the optoelectronic device 30. The optical fibers 32 had to be coupled to the optoelectronic device 30 prior to placing the device 30 into the cavity 22D of the cap because the limited space in cavity 22D.

Soldering is an advantage for two reasons. First, solder provides an improved thermal conductive bond between the optoelectronic device 30 and the metal lid 21 and therefore provides improved cooling of the device 30. Secondly, if the optoelectronic device 30 is defective, it is easily removed by simply heating the solder bond. A replacement optoelectronic device may then soldered onto the lid 21. In the prior art, removing a device that was adhesively bonded in the cap was very difficult and time consuming.

After the optoelectronic device 30 is soldered to the pedestal 21A, the device is wirebonded to the pins 21C that provide electrical power and communication signals to device 30. The optical fibers 32A and 32B are then actively aligned with device 30. This is another advantage of the invention because the prior art did not allow the optical fibers 32 to be actively aligned (i.e., aligned while a device is operating). During active alignment, the optoelectronic device 30 is electrically active and light signals are transmitted through the optical fibers 32A and 32B. Active alignment allows improved alignment resulting in reduced insertion loss and improved performance. This is particularly useful for aligning active devices such as SOAs, lasers, photoreceivers, phototransistors, and the like that absorb or emit light signals with the help of electrical energy. The optoelectronic device 30 is characterized at the same time as the active alignment process. Optical fibers 32A and 32B are coupled to the optoelectronic device 30 via fiber blocks 31A and 31B in a conventional manner.

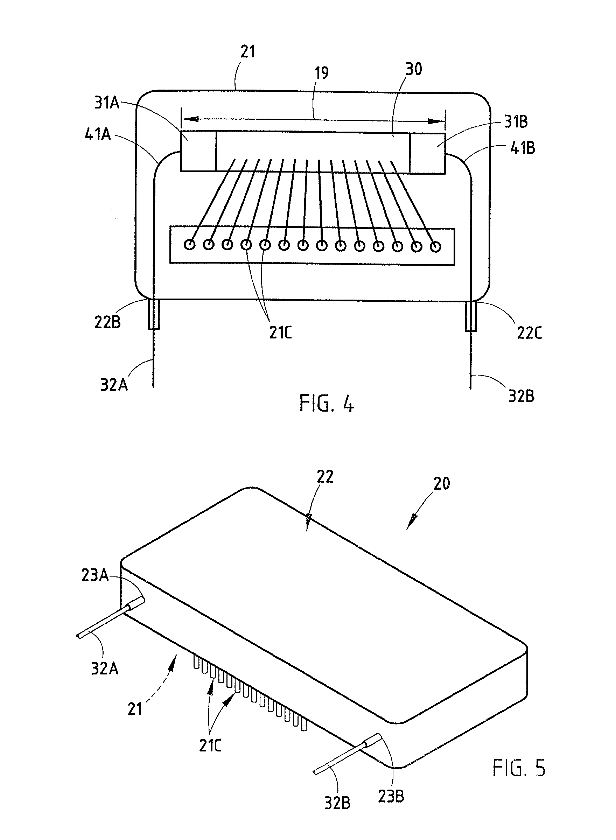

Fig. 5 is a perspective view of the assembled package 20 according to the invention. Cap 22 covers the optoelectronic device and is welded to lid 21 to form a hermetic seal. Optical fibers 32A and 32B exit the package 20 through brazed tubes 23A and 23B. Brazed tubes 23A and 23B are attached to cap 20 at fiber apertures 22B and 22C to allow optical fibers 32 to exit cap 22. Optical fibers 32 are bonded to the interior of tubes 23 with adhesive to form a hermetic seal.

In another aspect of the invention, the assembly steps are performed much easier because the optoelectronic device 30 is mounted on a relatively flat surface that provides easy access to the components. In contrast, the prior art mounts the optoelectronic device in a cavity in the cap that makes the assembly process difficult due to the confined working space. For purposes of this specification the phrase "relatively flat" refers to a lid 21 as illustrated in Figures 2 and 3 or a similar lid with sufficiently short sidewalls so that they do not substantially interfere with the assembly steps described in this specification. In general, sidewalls of a height less than 2.0 mm or lower than the top of the optoelectronic will satisfy this definition

In a related aspect of the invention, the inventive flat metal package 20 is smaller because the cavity 22A in the cap 22 is smaller than the cavity 12A in the prior art. The prior art made the cavity in the cap larger than needed to enclose the optical components in order to facilitate the delicate assembly of components inside of the cap. The cavity 22A of the present invention is sized to precisely cover the optoelectronic components.

Yet another aspect of the invention is the compact length of the package 20 illustrated by Figure 4. The design according to the invention allows for a package 20 having a reduced length compared to the prior art. Figure 4 is a top view of the multi-function lid 21 according to the invention. An optoelectronic device 30 is shown soldered to pedestal 21A, wirebonded to pins 21C, and coupled to optical fibers 32. The required length of package 20 is:

Length = L + 5 mm + 5 mm

Where L equals the length of the optoelectronic device 30 plus the fiber blocks 31. The preferred radius of curvature for the arcs 41 of the optical fibers 32 is 5 mm. Therefore, the overall required length is L + 10 mm which is significantly shorter than the prior art. Referring back to Figure 1B, the length of package 10 can be defined as:

Length = L + 13 mm + 13 mm

Where 13 mm is the length required to accommodate the stress reducing S-bend of the optical fibers 12 in the prior art. The overall required length in the prior art is L + 26 mm. Therefore, the length reduction or savings from the new design is as much as 16 mm.

Another aspect of the invention is the thermal expansion stress management. Optical fibers are very sensitive to stress. One source of stress is thermal expansion and contraction of the thin metal package 20. The invention reduces the stress on the optical fibers 32A and 32B by rotating the fibers into approximately a 90-degree arc between the optoelectronic device 30 and the fiber apertures 22B and 22C in the sidewall of the cap 22. The radius of the arcs 41 is preferably between 2.0 mm and 8.0 mm, and more preferably between 4.0 mm and 6.0 mm, and most preferably about 5.0 mm. Using the inventive design, thermal cycling of the package 20 only causes a bending in the radius of arcs 41A and 41B, without causing stress to the fiber block attaching the fibers 32 to the optoelectronic device 30.

In yet another aspect, the inventive flat metal package 20 is thinner than the prior art packages. The 90-degree stress-reducing arc of the present invention is in the same plane as the optoelectronic device 30. In contrast, the stress relieving S-bend of the prior art (see Figure 1B) is partially in the vertical direction and therefore increases the thickness of the package. Consequently, the inventive package 20 of the invention is made thinner than the prior art package.

The method of the invention follows from the description given above. A lid and an optical device are provided. The lid is preferably manufactured using chemical etching or electrochemical etching. The optical device is preferably a planar type device and is mounted to the lid preferably with solder. If the optical device has electrical leads they are wired bonded to pins provided in the lid. Electrical energy and signals are provided to the optical device via the pins as needed to accomplish active alignment and characterization of the optical device with optical fibers. Optical fibers are provided and aligned and coupled with the optical device.

A cap is provided comprising a cavity and at least one fiber aperture. The cap is preferably manufactured using embossing, stamping, MIM, chemical etching, or electrochemical etching. The optical fibers are formed into a stress-relieving arc of approximately 90-degrees and threaded through the fiber apertures. The cap is then lowered over the optical device. The cap and lid are hermetically sealed along their common edge via seam sealing, soldering, welding, laser welding, adhesive bonding, or the like. Those skilled in the art recognize that the inventive flat metal package 20 can be used to enclose a variety of optical and optoelectronic devices including planar type devices such as VOAs, TO switches, various filters, and SOAs.

It will become apparent to those skilled in the art that various modifications and adaptations ca be made to the present invention without departing from the spirit or scope of this invention. Thus, it is intended that the present invention cover the modifications and adaptations of this invention, provided they come within the scope of the appended claims and their equivalents.

## Claims

1. A method of manufacturing an optical planar package comprising the steps of:
providing a substantially flat lid;
providing an optical device;
mounting said optical device to said lid;
providing at least two optical fibers;
optically aligning said at least two fibers with said optical device;
coupling said at least two fibers to said optical device;
providing a cap comprising a cavity for receiving the optical device and at least one fiber aperture in a sidewall of said cap; and
inserting at least one of said optical fibers through said fiber aperture.

2. The method of manufacturing of claim 1 wherein at least one of said optical fibers are bent into a thermal expansion stress-relieving arc of approximately 90 degrees.

3. The method of manufacturing of claim 1 further comprises the step of attaching the cap to the lid.

4. The method of manufacturing of claim 3 wherein the attaching step comprises a hermetic seal between the cap and the lid.

5. The method of manufacturing of claim 3 wherein the step of attaching said cap comprises a method selected from the group consisting of soldering, welding, laser welding, parallel seam sealing, and adhesive bonding.

6. The method of manufacturing of claim 1 wherein the step of mounting said optical device to said lid comprises a method of mounting selected from the group consisting of soldering and adhesive bonding.

7. The method of manufacturing of claim 1 further comprising the step of wirebonding said optical device to electrical connections.

8. The method of manufacturing of claim 7 wherein said electrical connections comprise electrical connections extending through said lid.

9. The method of manufacturing of claim 1 further comprising the step of actively **characterizing** said optical device.

10. The method of manufacturing of claim 1 wherein said lid comprises a pedestal for mounting said optical device.

11. The method of manufacturing of claim 1 wherein the step of providing said lid comprises the step of forming said lid using a process selected from the group consisting of chemical etching and electrochemical etching.

12. The method of manufacturing of claim 1 wherein the step of providing said cap comprises the step of forming said cap using a process selected from the group consisting of embossing, stamping, metal injection molding, chemical etching, and electrochemical etching.

13. An optical package comprising:
a lid;
an optical device mounted on said lid;
a cap having a cavity of sufficient size to allow the cap to be mounted onto the lid and enclose the optical device;
an optical fiber aperture in a sidewall of the cap;
an optical fiber optically coupled to the optical device and extending through the fiber aperture; and
wherein said lid is sufficiently flat such that any sidewall of said lid does not substantially interfere with the assembly of the optical device onto said lid.

14. The optical package of claim 13 wherein the sides of said lid are less than 2.0 mm high.

15. The optical package of claim 13 wherein the sides said lid are lower than the top of the optical device.

16. The optical package of claim 13 wherein said lid comprises a pedestal on which the optical device is mounted.

17. The optical package of claim 13 wherein said lid comprises at least one electrical pin extending through said lid and electrically coupled with said optical device.

18. The optical package of claim 13 wherein said optical fiber is formed into a stress-relieving arc between said optical device and said fiber aperture.

19. The optical package of claim 18 wherein said stress-relieving arc is approximately a 90 degree arc having a radius of between 2 mm and 8 mm.

20. The optical package of claim 19 wherein said radius is between 4 mm and 6 mm.

21. The optical package of claim 20 wherein said radius is about 5 mm.

22. The optical package of claim 13 wherein said optical device is soldered to said lid.

23. The optical package of claim 13 wherein said optical device is a planar optical device.
